# EUROPÄISCHE PATENTSCHRIFT

(11) **EP 1 796 258 B1**
(45) Veröffentlichungstag und Bekanntmachung des Hinweises auf die Patenterteilung: **22.10.2008**
(21) Anmeldenummer: 05027095.8
(22) Anmeldetag: 12.12.2005
(51) Int. Cl.: H02P 6/18, H02P 25/02, H02P 6/14

(54) **Elektromotor und Verfahren zum Anregen eines solchen**
Electrical motor and method for its excitation
Moteur électrique et procédé de son excitation

(43) Veröffentlichungstag der Anmeldung: 13.06.2007
(73) Patentinhaber: Ziehl-Abegg AG, 74653 Künzelsau (DE)
(72) Erfinder: Knorr, Joachim, 97996 Niederstetten (DE); Egner, Uwe, 74677 Dörzbach (DE)
(74) Vertreter: Jacoby, Georg

(56) Entgegenhaltungen:
- EP-A- 1 612 927
- WO-A-01/37420
- JP-A- 2004 312 834
- US-A1- 2005 218 848

## Beschreibung

### GEBIET DER ERFINDUNG

Die Erfindung betrifft einen Elektromotor und ein Verfahren zum Anregen eines Elektromotors.

### HINTERGRUND DER ERFINDUNG

Häufig werden Elektromotoren grob in Drehfeldmotoren und Stromwendermotoren eingeteilt. Die Gruppe der Stromwendermotoren zeichnet sich dadurch aus, dass die Polarität eines Elektromagneten gesteuert werden muss. Ein - üblicherweise mechanischer - Stromwender oder Kommutator polt dazu den Strom, der durch die Wicklung des Elektromagneten fließt, entsprechend der Drehung bzw. Lage des Rotors im richtigen Augenblick um. Um Nachteile einer mechanischen Kommutierung, wie Bürstenfeuer oder Kohlestaub, zu vermeiden, werden die Motoren zunehmend elektronisch kommutiert. In diesem Fall ist eine zuverlässige Erfassung der Rotorlage zur Bestimmung der optimalen Kommutierungszeitpunkte unerlässlich. Auch bei anderen Elektromotorgruppen kann die Erfassung der Rotorlage wünschenswert sein.

Konventionelle Systeme erfassen die absolute Rotorlage oftmals mit Hallsensoren. Die Hallsensoren werden üblicherweise im Inneren des Motors im Magnetfeld des Rotors angebracht und detektieren durch die Rotordrehung verursachte Magnetfeldwechsel. Je nach Phasenzahl des Motors ist eine entsprechende Anzahl von Hallsensoren notwendig, um die absolute Rotorlage ausreichend genau bestimmen zu können. Da die Sensoren im Inneren des Motors Temperaturschwankungen, Staub, ätzenden Dämpfen oder Feuchtigkeit ausgesetzt sein können, ist ein aufwändiger Schutz sowie eine aufwändige Kabelführung zur gewöhnlich außerhalb des Motors angebrachten Steuerelektronik notwendig, mit der der Elektromotor angeregt wird.

Die EP 0 874 442 A2 zeigt einen elektromechanischen Winkelgeber (oder auch magnetischen oder induktiven Sensor) zum Bestimmen der Rotorposition, der direkt an einem am Rotor bzw. an der Rotorwelle befestigten Lüfterrad angeordnet ist. Dadurch muss die Rotorlage nicht mehr aufwändig im Inneren des Motors gemessen werden, sondern ist an einen günstigeren Ort außerhalb des Motorinnenraumes verlegt. Hier ergibt sich jedoch das Problem, dass der Sensor bei der Fertigung bezüglich des Rotors ausgerichtet werden muß.

Neben der Verwendung zusätzlicher Sensoren zur Lageerfassung des Rotors gibt es weitere bekannte Verfahren, bei denen die durch die relative Bewegung des Magnetfelds in den Motorwicklungen induzierte Spannung quasi sensorlos gemessen wird (über die auch die Gegen-Elektromotorische Kraft (EMK) oder back electro motive force (BEMF) erfasst werden kann). Die Höhe dieser Spannung ist proportional zur Winkelgeschwindigkeit. Durch Bestimmung des Nulldurchgangs der induzierten Spannung kann beispielsweise auf die Rotorlage bzw. einen optimalen Kommutierungszeitpunkt geschlossen werden. Diese Messung funktioniert allerdings nur für Motoren, bei denen sich zu jedem Zeitpunkt eine Wicklung in einem unbestromten Zustand befindet; auf einer stromführenden Wicklung kann die induzierte Spannung nicht festgestellt werden. Obwohl sie bestimmte vorteilhafte Kommutierungsarten wie die Sinuskommutierung, bei der alle Wicklungen permanent Strom führen, unmöglich macht, verwenden bürstenlose Gleichstrommotoren häufig diese Art der Rotorlageerfassung.

Weitere Verfahren bestimmen die Rotorlage mit zusätzlichen Sensoren, die nur eine Änderung der Rotorlage, also nur die relative Rotorlage erfassen, wie inkrementelle Lagegeber. So offenbart die DE 103 15 754 A1 ein Verfahren, wie aus der mittels eines inkrementellen Lagegebers ermittelten relativen Rotorlage die absolute Rotorlage bestimmt werden kann, und das bei nahezu stillstehender Synchronmaschine. Dabei wird der Rotor durch einen sinusförmigen Statorstrom zum Schwingen mit sehr kleiner Amplitude angeregt und die Phasenbeziehung zwischen der vom inkrementellen Lagegeber erfassten mechanischen Schwingung und dem anregenden Strom festgestellt. Aus dieser Phasenbeziehung lässt sich die auf eine Polteilung des Stators bezogene Rotorlage bestimmen. In Kenntnis der absoluten Rotorlage genügt für die weitere Anregung der Synchronmaschine die relative Information vom inkrementellen Lagegeber.

Die US 4,746,850 schlägt vor, die Rotorlage eines elektronisch kommutierten Motors im Stillstand zu ermitteln, indem ein Wechselstrom mit konstanter Frequenz in die Wicklungen des Rotors eingeprägt wird. Die daraufhin in die Statorwicklungen induzierten Spannungen werden gemessen und auf ihre Vorzeichen hin untersucht. Je nach Vorzeichenkombination kann die Rotorlage innerhalb eines gewissen Bereichs bestimmt werden, der zum Festlegen eines optimalen Anfahrsignals ausreicht. Die induzierte Spannung wird in JP 2004312834 mit Hilfe von Hall-Sensoren korrigiert, und das in gesamten Drehzahlbereich.

Es ist Aufgabe der Erfindung, einen Elektromotor basierend auf einer unaufwändigen Rotorlageerfassung anzuregen.

### ZUSAMMENFASSUNG DER ERFINDUNG

Die Erfindung stellt ein Verfahren nach Anspruch 1, eine Vorrichtung nach Anspruch 10 zum Anregen eines Elektromotors bereit. Die abhängigen Ansprüche betreffen vorteilhafte Ausführungsformen der Erfindung.

### KURZBESCHREIBUNG DER ZEICHNUNG

- Fig. 1: ist ein Übersichtsbild eines erfindungsgemäßen Aufbaus;
- Fig. 2: zeigt ein Ausführungsbeispiel eines konventionellen Wechselrichters zum Bestromen der Statorwicklungen;
- Fig. 3: zeigt ein Ausführungsbeispiel einer erfindungsgemäßen Magnetkappe;
- Fig. 4: zeigt die an einer erfindungsgemäßen Magnetkappe erfassten Signale;
- Figur 5: zeigt die Veränderung der induzierten Spannung während eines Korrekturvorgangs gemäß der Erfindung;
- Figur 6: zeigt einen Schritt des Korrekturvorgangs gemäß der Erfindung; und
- Figur 7: stellt einen Glättung des Korrekturvorgangs mittels einer Rundlaufoptimierung dar.

### DETAILLIERTE BESCHREIBUNG BEVORZUGTER AUSFÜHRUNGSBEISPIELE

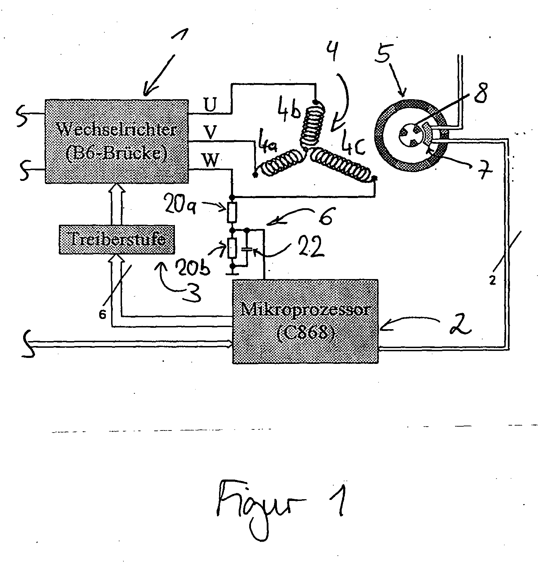

Bevor auf Fig. 1 näher eingegangen wird, folgen noch einige allgemeine Anmerkungen.

Die Erfindung ist allgemein für Elektromotoren geeignet, die basierend auf der gemessenen Rotorlage angeregt werden sollen. Sie ist speziell für bürstenlose permanentmagneterregte Gleichstrommotoren (BLDC-Motoren) oder die hierzu ähnlichen bürstenlosen permanentmagneterregten Wechselstrommotoren (PMS-Motoren) vorteilhaft, weil hier eine zuverlässige Lagebestimmung des Rotors für einen qualitativen Betrieb des Motors erforderlich ist und die Erfindung kostspielige konventionelle Elektronik ersetzt.

Die nachfolgenden, zur besseren Verständlichkeit dienenden Ausführungsbeispiele sind am Beispiel von bürstenlosen permanentmagneterregten Gleichstrommotoren beschrieben. Für die Verwendung anderer Elektromotoren müssen ggf. kleinere Änderungen vorgenommen werden.

Im Allgemeinen besteht der Rotor bei BLDC-Motoren aus einem Permanentmagneten. Für die Erzeugung eines Drehmoments bestromt hier eine Motorsteuerung, beispielsweise ein Prozessor mit einem Wechselrichter, die stationären Statorwicklungen. Ein optimales Drehmoment entsteht, wenn der Prozessor ein Statorfeld vorgibt, das dem Rotorfeld permanent um 90 Grad vorauseilt. Im Realfall wird dieser Winkel allerdings immer mehr oder weniger stark zwischen einer Ober- und einer Untergrenze schwanken.

Figur 1 zeigt eine Ausführungsform eines erfindungsgemäßen Elektromotors mit der zugehörigen Motorsteuerung samt Sensorik.

Die Motorsteuerung umfasst einen Wechselrichter 1 mit drei Zweigen für die drei Phasen U, V und W, einen Prozessor 2 und eine Treiberschaltung 3 für den Wechselrichter 1.

An den Eingang des Wechselrichters kann ein nicht näher dargestellter Gleichrichter mit einer Erdschlusserkennung, der beispielsweise die Wechselspannung eines dreiphasigen Versorgungsnetzes in eine Gleichspannung umwandelt, eine Zwischenkreisstabilisierung (mit einer Zwischenkreiskapazität), die die vom Gleichrichter ausgegebene Zwischenkreisspannung stabilisiert, sowie ein nicht näher dargestellter DC/DC-Wandler zum Liefern einer 24V und 18V Versorgungsspannung geschaltet sein. Ebenso kann an den Prozessor 2 ein nicht näher dargestellter Schaltregler zum Liefern von dessen 3,3V Versorgungsspannung angeschlossen sein. Der Prozessor 2 kann über eine serielle Schnittstelle (nicht dargestellt) mit einem PC oder einer ähnlichen Steuerung verbunden sein, die einem Benutzer Steuerungs- oder Überprüfungshandlungen erlaubt.

Der Elektromotor weist einen Stator 4 mit drei Wicklungen 4a, b und c auf, von denen jeweils ein Wicklungsende an die Phasen U, V und W vom Wechselrichter 1 angeschlossen sind und die übrigen drei Wicklungsenden miteinander sternförmig verbunden sind. Selbstverständlich können die Wicklungen des Stators 4 alternativ auch dreieckförmig miteinander verschaltet sein.

Die Sensorik der Motorsteuerung umfasst eine BEMF-Erfassungsschaltung 6 und auf einer Hallplatine 7 angebrachte Hallsensoren, die in der Nähe einer Magnetkappe 8 innerhalb des Elektromotors angeordnet ist und dem Prozessor 2 Messsignale liefert, die das Magnetfeld der Magnetkappe 8 messen. Die Magnetkappe 8 ist mit der mit dem Rotor 5 verbundenen Motorwelle gekoppelt und vollführt deshalb dieselben Rotationsbewegungen wie der Rotor 5. Sowohl der Rotor 5 als auch die Magnetkappe 8 weisen mehrere schraffiert dargestellte Permanentmagnete auf, wobei die helleren und dunkleren Schraffierungen die beiden verschiedenen Pole darstellen. Die Messsignale von der Hallplatine 7 werden über eine Busleitung zum Prozessor 2 sowie über eine separate Busleitung auch zu anderen Geräten (nicht dargestellt) gesendet. Wenn sich die Hallsensoren auf das Erd- bzw. Nullpotential beziehen, können ihre Messsignale durch Optokoppler galvanisch getrennt werden. Die Busleitung zwischen Prozessor 2 und Hallplatine 7 liefert auch deren Spannungsversorgung.

Die BEMF-Erfassungsschaltung 6 weist einen aus zwei Widerständen 20a, b gebildeten Spannungsteiler und einen unter anderem aus einem Kondensator 22 gebildeten Tiefpassfilter auf und ist in der Fig. 1 zwischen den Anschluss W und einen Analog-Digital-Wandlereingang des Prozessors 2 geschaltet. Sie erfasst die in die Wicklung 4c des Stators 4 induzierte Spannung. Während eines Zeitabschnitts, in dem diese Wicklung 4c unbestromt ist, liest der Prozessor 2 Signale von der BEMF-Erfassungsschaltung 6 ein. In einigen Ausführungsformen der Erfindung sind für die Erfassung der in die beiden anderen Wicklungen 4a und 4b induzierten Spannungen zwei weitere nicht näher dargestellte BEMF-Erfassungsschaltungen vorgesehen.

Bei anderen Ausführungsformen der Erfindung nehmen die BEMF-Erfassungsschaltungen anstelle der induzierten Spannung den induzierten Strom auf und leiten den gemessenen Wert an den Prozessor 2.

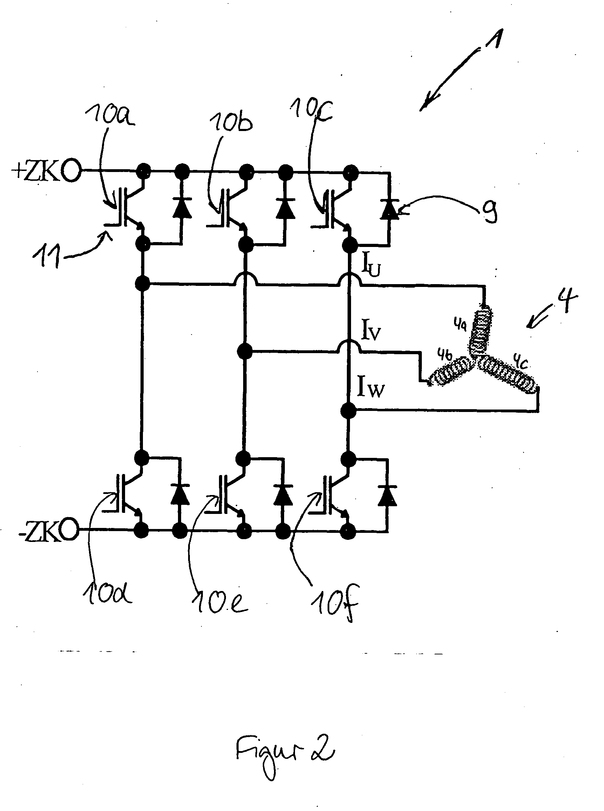

Wie in Fig. 2 näher dargestellt, weist der Wechselrichter 1 sechs Schalter 10a-f auf. Entsprechend gibt der Prozessor 2 beispielsweise auf sechs pulsweitenmodulierten (PWM)-Kanälen dem Wechselrichter 1 (über die Treiberstufe 3) sechs Steuersignale über eine Sechsfach-Leitung vor, die die sechs Schalter 10a-f über deren Steuereingänge 11 steuern. Durch entsprechendes Öffnen und Schließen der Schalter 10a-f werden die Statorwicklungen 4a-c gemäß einer vorgegebenen Kommutierungsart (Blockkommutierung, Sinuskommutierung, etc.) kommutiert. Dabei sind die Schalter 10a-f als Halbleiterschalter, wie MOSFETS oder IGBTs, ausgeführt. Beispielsweise kann der Prozessor 2 die unteren drei Schalter 10d-f direkt über die Treiberstufe 3 ansteuern, während die oberen drei Schalter 10a-c aufgrund des wechselnden Bezugspotentials zusätzlich jeweils einen nicht dargestellten Optokoppler und eine Bootstrapschaltung benötigen.

Entsprechend der in Fig. 2 dargestellten Beschaltung der Statorwicklungen 4a-c fließt, wenn die Motorsteuerung beispielsweise die Schalter 10a und 10e schließt, ein Strom durch die Wicklungen 4a und 4b, die dadurch ein Magnetfeld erzeugen. Es ist auch denkbar, durch ein Schließen mehrerer Schalter 10a-f alle drei Wicklungen 4a-c zu bestromen.

Je nach vorgegebener Ansteuerungsdauer und -reihenfolge der Schalter 10a-f resultieren verschiedene Kommutierungsarten. Als besonders vorteilhaft erweist sich häufig eine Sinuskommutierung, die einen besonders ruhigen Motorlauf mit reduzierten Lauf- und Kommutierungsgeräuschen sichert. Soll jedoch eine BEMF-Erfassung bzw. eine Erfassung der induzierten Spannung stattfinden, sollte immer eine Wicklung 4a-c unbestromt bleiben (was bei der Sinuskommutierung nicht der Fall ist), wofür eine Blockkommutierung angewendet wird. Es existieren aber auch andere, dem Durchschnittsfachmann bekannte Kommutierungsarten, bei denen die BEMF erfasst werden kann.

Parallel zu den Ein- und Ausgängen der Halbleiterschalter 10a-f sind Freilaufdioden 9 geschaltet, die die Schalter 10a-f vor einer selbstinduzierten Überspannung beim Ausschalten schützen.

Für ein optimales Drehmoment und damit einen hohen Wirkungsgrad des Motors sollte, wie schon zuvor erwähnt, das Statorfeld dem Rotorfeld immer um 90 Grad vorauseilen. Hierfür muss die Motorsteuerung die Schaltzeitpunkte der Schalter 10a-f auf die momentane Rotorlage abstimmen, wofür ihr wiederum die Information über die absolute Rotorlage ständig zur Verfügung stehen sollte.

Die in Figur 1 dargestellte Ausführungsform der Erfindung sieht zur Erfassung der Information über die relative Rotorlage den an der Motorwelle angebrachten und aus der Magnetkappe 8 sowie den Hallsensoren 7 bestehenden Sensor vor.

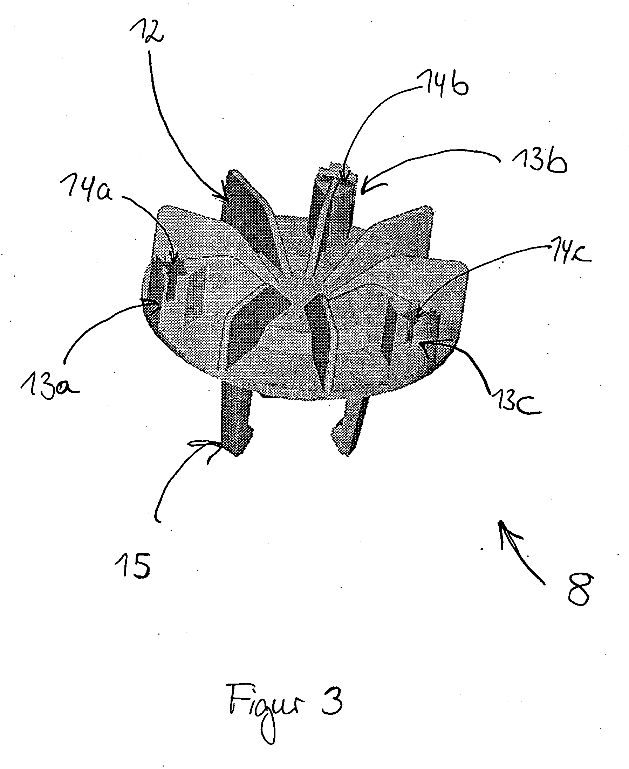

Figur 3 zeigt eine besonders vorteilhafte Ausführungsform einer solchen Magnetkappe 8, welche die Funktion eines Magnetfeldgebers zusätzlich mit der eines Lüfterrades verbindet. Für diese Zusatzfunktion weist die Magnetkappe 8 auf ihrer Oberseite in symmetrischen Abständen angebrachte Lüftungslamellen 12 auf. Da die Magnetkappe 8 auf ein Ende der Motorwelle aufgesteckt wird und sich demnach mit dieser dreht, erzeugen die Lüftungslamellen 12 einen Luftstrom, der zur Kühlung der Motorelektronik o.ä. dienen kann. Die Motorelektronik kann beispielsweise in einem Gehäuse aufgenommen sein, das an ein axiales Ende des Motorgehäuses staub- und flüssigkeitsdicht angeflanscht ist. Die Motorwelle erstreckt sich dabei durch das Motorgehäuse in das Innere dieses Motorelektronikgehäuse und erzeugt mit dem Lüfterrad eine geschlossene Luftzirkulation innerhalb des Motorelektronikgehäuses zur Kühlung der elektronischen Bauteile der Motorsteuerung. Einen festen Halt der Magnetkappe 8 sichern die Befestigungsklemmen 15, deren vorspringendes Ende vorteilhaft in eine Nut in der Motorwelle einrastet. In anderen Ausführungsformen werden andere Befestigungsmittel gewählt, beispielsweise wird die Magnetkappe 8 wie ein Kragen auf die Welle aufgesteckt oder ihr umgelegt.

Das Magnetfeld der Magnetkappe 8 ist so ausgebildet, dass es Rückschlüsse auf das Magnetfeld des Rotors 5 zulässt. Einige Ausführungsformen formen dafür das Magnetfeld des Rotors 5 in Bezug auf dessen Polzahl genau nach, beispielsweise in Gestalt eines Magnetrings; dessen Magnetfeldstärke selbstverständlich geringer sein wird als diejenige des Rotormagnetfeldes. In anderen Ausführungsformen, wie der in Figur 3 abgebildeten, weist die Magnetkappe 8 eine Anzahl von Einzelmagneten 14a-c auf, die verschieden zur Anzahl an Polen des Rotormagnetfelds sein kann. Vorzugsweise sind in die Lüftungslamellen 12 am Außenrand der Magnetkappe 8 Taschen 13a-c eingearbeitet, die bezogen auf den Umfang der Magnetkappe 8 die als kleine Permanentmagnete ausgebildeten Einzelmagnete 14a-c aufnehmen. In der vorliegenden Ausführungsform zeigt ein Pol der eingesteckten Permanentmagnete 14a-c nach außen und einer nach innen. Dann spricht bei einer elektrischen Umdrehung ein im Magnetfeld der Magnetkappe 8 angebrachter Hallsensor genau einmal (auf das Feld des nach außen zeigenden Pols) an.

Andere Ausführungsformen der Magnetkappe 8 weisen eine höhere Anzahl von Einzelmagneten 14a-c pro Magnetpol des Rotors 5 auf, jedoch benötigen alle Ausführungsformen mindestens so viele Einzelmagnete 14a-c, dass für jede mechanische Umdrehung ein Lagesignal des Sensors vorliegt.

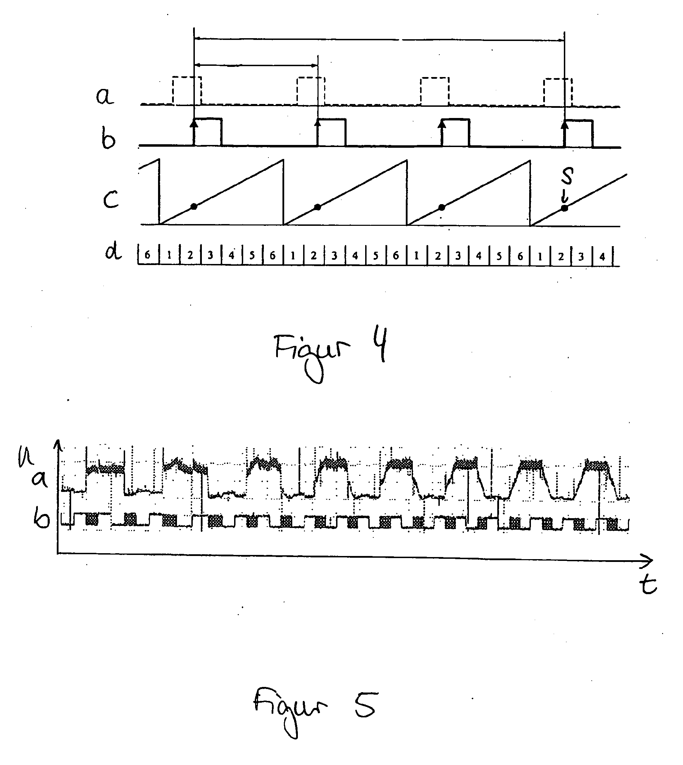

Auf der Hallplatine 7 ist der Hallsensor so angeordnet, dass er das Magnetfeld der rotierenden Magnetkappe 8 erfassen kann. Beispielsweise kann der Hallsensor mit einer Schmitt-Trigger-Schaltung kombiniert sein, um ein digitales Signal zu erhalten. Dabei wird eine geeignete Schwellenspannung vorgegeben, beispielsweise derart, dass der Sensorausgang nur dann mit einem "HIGH"-Signal ein Magnetfeld anzeigt, wenn einer der Einzelmagnete 14a-c den Hallsensor direkt passiert. Das Ausgangssignal eines derart ausgestalteten Hallsensors ist in Kurvenform b von Figur 4 zu sehen. Wahlweise kann noch ein zweiter Hallsensor in bezogen auf den Umfang der Magnetkappe 8 geringem Abstand zum ersten Hallsensor vorgesehen sein, dessen Signal in Kombination mit dem ersten Signal zur Drehrichtungsbestimmung herangezogen wird und in Kurvenform a von Figur 4 gestrichelt dargestellt ist. Andere Ausführungsformen weisen mehr als zwei Hallsensoren auf.

Anstelle einer Magnetkappe 8 mit Hallsensoren kann der Sensor auch als Winkelgeber, Resolver, optischer Sensor oder jedes andere bekannte Mittel zur Erfassung einer Informationen über die relative Rotorlage ausgebildet sein, solange er mit der Drehbewegung des Rotors gekoppelt ist. Gleichgültig, wie der Sensor allerdings ausgebildet ist, liefert er jedoch nur eine relative Lageinformationen, da er während der Fertigung an der Rotorwelle willkürlich angebracht wird. Da für die optimale Bestimmung der Kommutierungszeitpunkte aber die absolute Rotorlage benötigt wird, muss der Winkelversatz zwischen diesem Sensor und dem Rotor ermittelt werden, um allein aus dem vom Sensor gelieferten Signal über die relative Rotorlage auf die absolute Rotorlage schließen zu können.

Für den Betrieb des Elektromotors ist deshalb ein spezielles Verfahren zur Ermittlung des Winkelversatzes vorgesehen, das während einer Rotorlagebestimmungsphase durchgeführt wird. Dieses Verfahren wird hier anhand eines Ausführungsbeispiels beschrieben, in dem diese Rotorlagebestimmungsphase während des Anlaufvorgangs des Motors durchgeführt wird und das die zuvor beschriebene Magnetkappe 8 mit Hallsensoren als Sensor zum Erfassen der relativen Rotorlage verwendet. Dies ist jedoch nicht einschränkend zu verstehen, da die Winkelversatzbestimmung auch zu einem anderen Zeitpunkt während des Motorbetriebes und die Erfassung der relativen Rotorlage auch mit anderen Sensoren (wie oben aufgelistet) durchgeführt werden kann.

Zu Beginn des Anlaufvorganges bei Rotorstillstand ist die absolute Rotorlage unbekannt und nicht direkt bestimmbar. Daher beginnt der Anlaufvorgang ohne Information über die Rotorstellung. In diesem Fall veranlaßt der Prozessor 2 eine Bestromung von zunächst einem beliebigen Wicklungspaar 4a-c. Nach einer bestimmten Zeit veranlasst er eine Kommutierung, und bestromt das nächtsfolgende Wicklungspaar 4a-c. Dies wiederholt er mehrere Male, wobei er den Zeitabstand zwischen den Kommutierungen zunehmend verringert und damit die Drehgeschwindigkeit des Rotors 5 vergrößert, bis sich eine messbare induzierte Spannung einstellt (zu Beginn des Anlaufvorgangs, insbesondere bei Rotorstillstand wird noch keine ausreichende Spannung induziert). Da bei einer solchen Ansteuerung der Rotor 5 dem vorgegebenen Statorfeld folgt und nicht umgekehrt das Statorfeld in Abhängigkeit von der Rotorlage erzeugt wird, kann noch kein guter Wirkungsgrad erzielt werden.

Vorteilhaft fließt während des Anlaufvorganges bereits die Relativinformation des Sensors ein, der von Anfang an die Drehgeschwindigkeit erfasst. Auch dann gibt der Prozessor 2 ein Drehfeld mit einer bestimmten Geschwindigkeit vor, die er aber unter Berücksichtigung der gemessenen Geschwindigkeit erhöht. Zum Erhöhen der Drehgeschwindigkeit wird das PWM-Tastverhältnis und dadurch die Ausgabespannung solange moderat angehoben, bis sich die vorgegebene Geschwindigkeit einstellt mit einer auswertbaren induzierten Spannung.

In einer Ausführungsform der Erfindung verarbeitet der Prozessor 2 eine Variable als Winkelzähler, die den elektrischen Winkel anzeigt. Nach einem Winkeldurchlauf von 0 bis 360 Grad springt der Zähler wieder auf Null. Anhängig vom Wert des Winkelzählers werden die Schalter l0a-f des Wechselrichters 1 angesteuert. Beispielsweise beginnt bei einer Blockkommutierung mit sechs Schritten der erste Kommutierungsschritt, wenn der Winkelzähler Null anzeigt; bei einem Sechstel des 360-Grad-Endwerts beginnt der zweite Schritt usw.. Figur 4 stellt den Wert des Winkelzählers in Kurvenform c dar, und die Einteilung der Kommutierungsschritte, die regelmäßig über die Zeit für einen Durchlauf des Winkelzählers (also über eine elektrische Umdrehung) verteilt sind, in Kurvenform d. Während einer elektrischen Umdrehung wird in diesem Ausführungsbeispiel genau ein Hallsignal des Hallsensors erfasst. Da die Magnetkappe 8 willkürlich aufgesetzt wurde, tritt das Hallsignal zu einem nicht vorhersagbaren Winkelzählerstand auf. Für das weitere Verfahren wird der Wert des Winkelzählers zu jedem "Synchronisationspunkt" S, also dem Zeitpunkt der ansteigenden Flanke des Hallsignals, gespeichert.

Mit zunehmender Drehzahl des Rotors 5 stellt sich schließlich eine auswertbare induzierte Spannung ein, aus der Rückschlüsse auf die Rotorposition gezogen werden können. Um sie erfassen zu können, wird für den Anlaufvorgang beispielsweise eine Blockkommutierung gewählt, bei der die Wicklungen 4a-c, in denen die BEMF-Erfassungsschaltung 6 die BEMF-Spannung erfasst, abwechselnd unbestromt bleiben. Es ist bekannt, dass sich bei optimaler Kommutierung ein charakteristisches BEMF-Spannungssignal einstellen sollte. Im vorliegenden Fall hat ein solches charakteristisches Spannungssignal einen trapezförmigen, symmetrischen Verlauf. Da während des Anlaufvorgangs die Kommutierung noch nicht optimal ist, stellt sich diese charakteristische Signalform zunächst noch nicht ein. Vielmehr hat das gemessene BEMF-Spannungssignal einer Wicklung 4a-c vor Abschluß des Korrekturvorganges noch eine annähernde Rechteckpulsform, wie in den ersten Perioden von Kurvenform a der Figur 5 für eine Motorphase beispielhaft dargestellt ist. Kurvenform b zeigt dabei den bestromten und unbestromten Zustand einer Wicklung 4a-c; wenn die betreffende Wicklung 4a-c unbestromt ist, schwankt die Spannung stark hin und her (grauer Bereich), während sie im bestromten Zustand auf einem festgelegten positiven oder negativen Wert liegt. Bekanntermaßen sollte bei korrekter Kommutierung das unbestromte Zeitintervall mit den abfallenden und ansteigenden Flanken eines charakteristischen trapezförmigen BEMF-Spannungssignals zusammenfallen. Bei Betrachtung der Kurvenform b ist jedoch erkennbar, dass die abfallenden und ansteigenden Flanken anfangs eher Sprünge jeweils zu Beginn der unbestromten Phase sind.

Daher bestimmt der Prozessor 2 aus dem erfassten BEMF-Spannungssignal in aufeinanderfolgenden unbestromten Zuständen einer Wicklung 4a-c, ob die beiden aufeinanderfolgenden steigenden und fallenden Flanken des BEMF-Spannungssignals jeweils dieselbe Steigung mit entgegengesetztem Vorzeichen aufweisen. Zudem bestimmt er aus aufeinanderfolgenden unbestromten Zuständen jeweils die Summe zeitlich nacheinander gemessener BEMF-Spannungswerte pro Zustand. Aufgrund der Symmetrie des charakteristischen trapezförmigen BEMF-Spannungssignals sollten sowohl die Flankensteigungen innerhalb eines Zustandes als auch die Summenwerte aufeinanderfolgender unbestromter Zustände übereinstimmen.

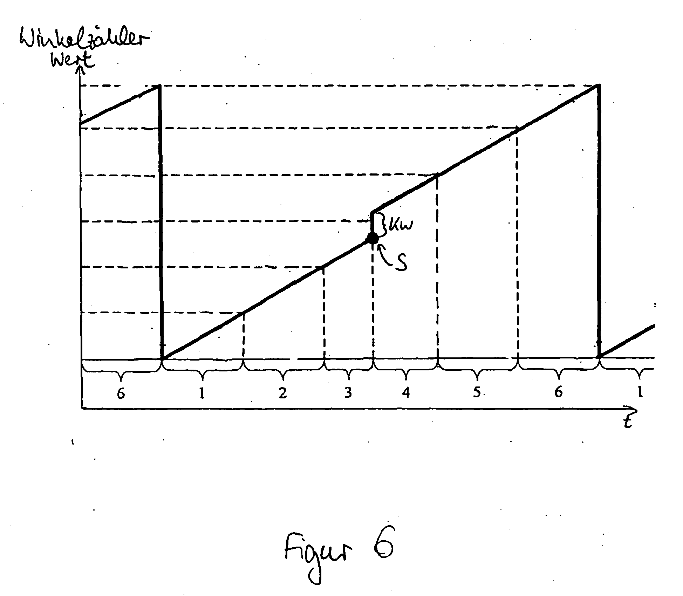

Wird keine (bzw. eine zu geringe) Übereinstimmung festgestellt, weil, wie in den anfänglichen Impulsen von Figur 5 ersichtlich, eine starke Abweichung von der charakteristischen Signalform vorliegt, so wird zum Synchronisationszeitpunkt ein (beispielsweise konstanter) Korrekturwert zum Wert des Winkelzählers addiert bzw. abgezogen und dieser berichtigte Wert des Winkelzählers gespeichert. Figur 6 zeigt die Auswirkungen dieser Maßnahme: der Wert des Winkelzeigers steigt um den Korrekturwert KW an. Im gezeigten Beispiel wird durch die Korrektur bereits der vierte Kommutierungsschritt fällig, da er zeitlich nach vorne verschoben wurde, während der dritte Kommutierungsschritt verkürzt ist. Entsprechend erfolgen die Kommutierungszeitpunkte zu einer anderen Rotorposition, die einen besseren Wirkungsgrad sichern sollte.

Die Höhe und das Vorzeichen des Korrekturwertes kann abhängig vom Übereinstimmungsgrad gewählt werden, z.B. kann der Betrag des Korrekturwertes linear von der Abweichung der Steigungsbeträge und/oder der Summenwerte abhängen und dessen Vorzeichen vom Vorzeichen der Differenz der Steigungsbeträge und/oder der Summenwerte.

Diese Schritte wiederholen sich so lange, bis die gewünschte Übereinstimmung der BEMF-Spannungswerte hergestellt und die Rotorlagebestimmungsphase damit beendet ist. Die sich während dieser Phase langsam einstellende Optimierung des Spannungsverlaufs kann in Figur 5 verfolgt werden, wo die induzierte Spannung am Ende die angestrebte charakteristische Signalform zeigt.

Die Summe der in allen Schritten ermittelten Korrekturwerte repräsentiert den Winkelversatz zwischen der absoluten Rotorlage und dem relativen Sensorsignal. Der letzte in der Rotorlagebestimmungsphase zu einem Synchronisationspunkt berichtigte und dann gespeicherte Wert entspricht deswegen der absoluten Rotorlage zum Zeitpunkt eines Hallsignals.

Basierend auf dem ermittelten Winkelversatz und dem Sensorsignal über die relative Rotorlage kann der Prozessor nun während der Betriebsphase die Erregung des Motors zum richtigen Zeitpunkt veranlassen. In dem oben beschriebenen Beispiel wurden während der Rotorlagebestimmungsphase die Kommutierungszeitpunkte bereits optimal verschoben; in der Betriebsphase sorgt der Prozessor in Kenntnis des Winkelversatzes bzw. der absoluten Rotorlage dafür, dass der Winkelzähler an jedem Synchronisationspunkt dem letzten gespeicherten, die absolute Rotorlage wiedergebenden Wert entspricht.

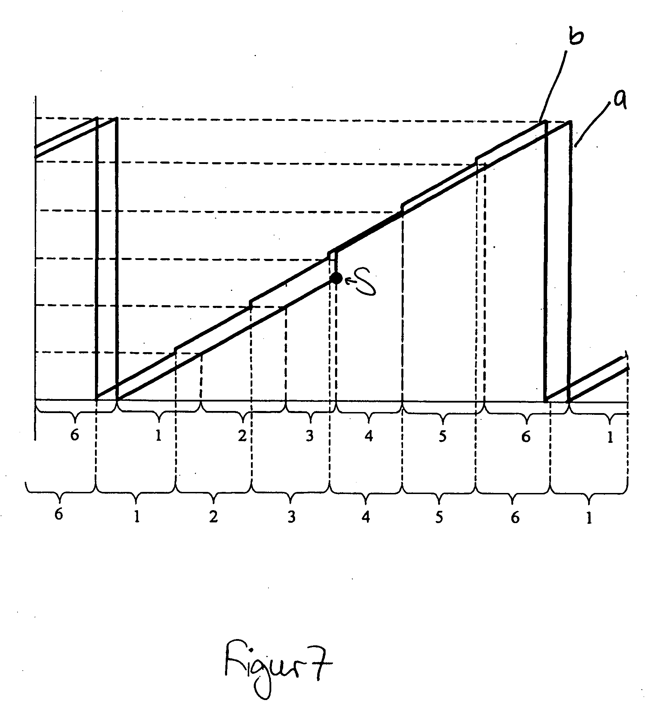

Bei einer Korrektur während der Rotorlagebestimmungsphase oder bei einer Synchronisation während der Motorbetriebsphase kann zwischen dem Winkelzähler und dem tatsächlichen Winkel ein recht großer Versatz auftreten. Daraus resultiert zu jedem Synchronisationspunkt ein Sprung des Winkelzählers, der wiederum ein Kommutierungsintervall gegenüber den anderen Kommutierungsintervallen stark verkürzt oder verlängert. Die dadurch entstehende unsymmetrische Drehmomenterzeugung kann durch eine Rundlaufoptimierung kompensiert werden. Figur 7 zeigt dazu in Kurve a einen lediglich zum Synchronisationspunkt S korrigierten Verlauf des Winkelzählers, während in Kurve b der Winkelzähler in der Summe mit dem gleichen Korrekturwert, aber über mehrere Zeitpunkte verteilt korrigiert wird und der Motorbetrieb damit rundlaufoptimiert ist. Die Rundlaufoptimierung verteilt also die durch den Korrekturwert verursachte Verkürzung oder Verlängerung eines Durchlaufs des Winkelzählers von einem Synchronisationspunkt zum anderen auf alle Kommutierungsintervalle. Dazu erhöht der Prozessor den Winkelzähler je nach Kommutierungsart zu mehreren Zeitpunkten, nicht nur zu einem Zeitpunkt.

Eine Erfassung der induzierten Spannung ist nach der Feststellung der absoluten Lage nicht mehr notwendig. Somit kann nach der Rotorlagebestimmungsphase eine beliebige Kommutierungsbetriebsart angewendet werden, ohne dass auf die Bestromung der einzelnen Wicklungen Rücksicht genommen werden muß (beispielsweise kann eine Sinuskommutierung erfolgen). Bei Bedarf kann die Rotorlagebestimmungsphase natürlich jederzeit, auch während des Betriebs des Motors, wiederholt werden. Dazu ist lediglich ein Umschalten auf eine geeignete Kommutierungsart, wie die Blockkommutierung, erforderlich.

Selbstverständlich sind die obigen Ausführungen beispielhaft zu verstehen. So kann die induzierte Spannung in einem erfindungsgemäßen Verfahren oder Aufbau in einer anderen Weise erfasst und ausgewertet werden, um den Winkelversatz oder die absolute Rotorlage festzustellen. Auch eine andere softwaremäßige Implementierung kann herangezogen werden.

Zusammenfassend kombiniert die Erfindung zum Zweck einer unaufwändigen Ableitung des optimalen Erregungszeitpunktes zwei Rotorlagebestimmungsverfahren derart, dass sie sich unter Vermeidung von verfahrenstypischen Nachteilen gegenseitig ergänzen. Anstatt einen Sensor im Motorinnern anzuordnen, der absolute Lageinformationen liefert, spart die Erfindung beispielsweise die Schutzumhüllung, die den Sensor vor ätzenden Dämpfen, Feuchtigkeit oder anderen äußeren Einflüssen schützt, eine Kabeldurchführung vom Motorraum zum Elektronikbereich und die Montage und Ausrichtung des Sensors im Motorinnern. Da außerdem der Sensor erfindungsgemäß nur noch relative Informationen zur Verfügung stellen muss, können beispielsweise bei der Messung mit Hallsensoren ein bis zwei Hallsensoren eingespart werden. Auch muss die Rotorlage nicht ausschließlich durch Messung der induzierten Spannung bestimmt werden, vielmehr steht die Wahl der Kommutierungsart außerhalb der Rotorlagebestimmungsphase absolut frei.

Demgegenüber steht der zusätzliche Aufwand für die Herstellung einer Magnetkappe mit ein bis zwei Hallsensoren, einer Schaltung zum Erfassen der induzierten Spannung und eventuell einer Verlängerung der Motorwelle. All diese Komponenten sind jedoch relativ kostengünstig zu realisieren, da beispielsweise die Hallsensoren und die Schaltung zur Erfassung der induzierten Spannung im selben Arbeitsgang wie die anderen Bauteile auf der Platine/den Platinen angebracht werden können. Somit fallen hier nur die Bauteilkosten an. Die Magnetkappe kann als Spritzgussteil ausgeführt und mit kleinen Magneten bestückt sein. Die Verlängerung der Motorwelle ist in der Regel unproblematisch. Insgesamt ergibt sich also eine deutliche Aufwands- und damit Kostenersparnis.

Bei steigender Motordrehzahl kann es erforderlich werden, die Erfassung des BEMF-Spannungssignals während der unbestromten Zustände einer Wicklung weiter zu verkürzen, da die unbestromte Wicklung eine gewisse Zeit zur Entmagnetisierung benötigt. Während dieser Zeit fließt der Phasenstrom des unmittelbar vorhergehenden bestromten Zustandes in gleicher Richtung weiter, fällt jedoch auf Null ab. In diesem Zeitraum kann die BEMF-Spannung nicht erfasst werden, da das Potential des unbestromten Zustandes über die Inversdioden auf dem positiven oder negativen Zwischenkreispotential liegt. Die Zeitdauer der Entmagnetisierung hängt proportional von der Drehgeschwindigkeit ab und kann vom Prozessor 2 entsprechend berücksichtigt werden.

Zum Bestromen einer Wicklung 4a-c. kann der Wechselrichter 1 als ein 2-Quadranten-Steller betrieben werden (der vorteilhaft mit geringen Schaltverlusten behaftet ist), bei dem einer der beiden zugehörigen Schalter 10a-f dauernd eingeschaltet ist, während der andere entsprechend dem vom Prozessor 2 vorgegebenen pulsweitenmodulierten Signal dauernd ein- und ausgeschaltet wird. Der Strom steigt innerhalb der Wicklung 4a-c nur an, wenn beide Schalter eingeschaltet sind, während er sonst (während der Impulspause des pulsweitenmodulierten Steuersignals) über die zugehörige Inversdiode 11a-f und den eingeschalteten Schalter 10a-f freilaufend ist und abhängig vom Wicklungswiderstand und den Kenndaten dieses Schalters 10a-f abfällt. Alternativ kann der Wechselrichter 1 auch als ein 4-Quadranten-Steller betrieben werden, bei dem beide einer Wicklung 4a-c zugehörigen Schalter gleichzeitig geschaltet werden. Diese Betriebsart kann vorteilhaft für schnelle Richtungswechsel und oder zum aktiven Abbremsen einer Last eingesetzt werden.

Anstelle der oben beschriebenen 6-Schritt-Blockkommutierung kann auch eine 12-Schritt-Blockkommutierung mit einer gleichmäßigeren Drehmomenterzeugung und damit einhergehenden geringeren Geräuschentwicklung angewendet werden, bei der zwischen jeden Schritt der 6-Schritt-Blockkommutierung ein Zwischenschritt eingefügt wird, in dem alle drei Phasen bestromt werden. Während dieser Zwischenschritte kann das BEMF-Spannungssignal zwar nicht erfasst werden, jedoch genügt dessen Erfassung während der verbleibenden sechs Schritte mit jeweils einer unbestromten Wicklung, um die absolute Rotorlage zu bestimmen.

Der Elektromotor kann als Außenläufermotor mit einem glockenförmigen Rotor ausgestaltet sein. Der glockenförmige Rotor bildet bei diesem Motortyp zusammen mit einer Statorplatte das Motorgehäuse. Innerhalb dieses Motorgehäuses befindet sich der an der Statorplatte befestigte Stator. Die Statorplatte ist weist eine zentral eingelassene Buchse zur Lagerung der Motorwelle auf. Alternativ kann der Elektromotor jeglicher Art sein. Der Elektromotor bzw. Außenläufermotor dient beispielsweise als Antrieb für einen Ventilator, wobei hierzu im Falle des Außenläufermotors unmittelbar am Rotor Anschlußstutzen zur Befestigung von Ventilatorflügeln vorgesehen sein können.

## Patentansprüche

1. Verfahren zum Anregen eines elektronisch kommutierten Elektromotors, das die folgenden Schritte umfasst:
sensorloses Erfassen einer durch Bewegung des Rotors (5) in eine Motorwicklung (4a-c) induzierten elektrischen Größe;
Erfassen der relativen Rotorlage mittels eines Sensors (7,8), der mit der Drehbewegung des Rotors (5) gekoppelt ist; und
Anregen des Elektromotors während einer Rotorlagebestimmungsphase basierend auf der erfassten induzierten elektrischen Größe und während einer Motorbetriebsphase basierend allein auf dem erfassten Sensorsignal.

2. Verfahren nach Anspruch 1, bei dem die erfasste induzierte elektrische Größe eine Spannung ist.

3. Verfahren nach Anspruch 1 oder 2, bei dem der Rotor (5) während der Rotorlagebestimmungsphase basierend auf dem Sensorsignal und der erfassten induzierten Größe angeregt wird.

4. Verfahren nach einem der vorangehenden Ansprüche, bei dem der Rotor (5) während der Rotorlagebestimmungsphase mit einer Kommutierungsart angeregt wird, bei der einzelne Motorwicklungen (4a-c) zeitlich aufeinanderfolgend unbestromt sind, und während der Motorbetriebsphase mit einer Kommutierungsart, bei der die Motorwicklungen (4a-c) durchgehend bestromt sind.

5. Verfahren nach einem der vorangehenden Ansprüche, bei dem der Rotor (5) aus dem Stillstand mit einer kontinuierlich steigenden Drehzahl angeregt wird, bis die Höhe der erfassten induzierten elektrischen Größe für eine Bestimmung der Rotorlage ausreicht, und dann die Rotoranregung mittels des Sensorsignals über die relative Rotorlage und der erfassten induzierten elektrischen Größe korrigiert wird.

6. Verfahren nach einem der vorangehenden Ansprüche, bei dem der Elektromotor mittels der erfassten relativen Rotorlage angeregt wird, die wiederum mittels der erfassten induzierten elektrischen Größe korrigiert wird.

7. Verfahren nach Anspruch 6, bei dem die Anregung des Elektromotors durch eine Verschiebung der Kommutierungszeitpunkte korrigiert wird.

8. Verfahren nach Anspruch 6 oder 7, bei dem die Korrektur auf der Basis der Steigung einer steigenden und einer fallenden Flanke und/oder der Summe von zeitlich nacheinander erfassten Werten der induzierten elektrischen Größe bestimmt wird.

9. Verfahren nach einem der vorangehenden Ansprüche, bei dem der Elektromotor mittels eines pulsweitenmodulierten Stroms angeregt wird, die Drehgeschwindigkeit des Rotors (5) gemessen wird, und abhängig von der gemessenen Drehgeschwindigkeit das Tastverhältnis des pulsweitenmodulierten Stroms geändert wird.

10. Elektronisch kommutierter Elektromotor, mit
einem Rotor (5);
einem Sensor (7,8), der ein Sensorsignal über die relative Rotorlage liefert; und
einer Steuerelektronik (1,2,3,6), die eine durch Bewegung des Rotors (5) in eine Motorwicklung (4a-c) induzierte elektrische Größe sensorlos erfasst und den Elektromotor während einer Rotorlagebestimmungsphase basierend auf der erfassten induzierten elektrischen Größe und während einer Motorbetriebsphase basierend allein auf dem erfassten Sensorsignal anregt.

11. Elektromotor nach Anspruch 10, bei dem die Steuerelektronik (1,2,3,6) eine Spannung als induzierte elektrische Größe erfasst.

12. Elektromotor nach Anspruch 10 oder 11, bei dem die Steuerelektronik (1,2,3,6) den Rotor (5) während der Rotorlagebestimmungsphase basierend auf dem Sensorsignal und der erfassten induzierten Größe anregt.

13. Elektromotor nach Anspruch 12, bei dem die Steuerelektronik (1,2,3,6) den Rotor (5) während der Rotorlagebestimmungsphase mit einer Kommutierungsart anregt, bei der einzelne Motorwicklungen (4a-c) zeitlich aufeinanderfolgend unbestromt sind, und während der Motorbetriebsphase mit einer Kommutierungsart, bei der die Motorwicklungen (4a-c) durchgehend bestromt sind.

14. Elektromotor nach einem der Ansprüche 10 bis 13, bei dem die Steuerelektronik (1,2,3,6) den Rotor (5) aus dem Stillstand mit einer kontinuierlich steigenden Drehzahl anregt, bis die Höhe der erfassten induzierten elektrischen Größe für eine Bestimmung der Rotorlage ausreicht, und dann die Rotoranregung mittels des Sensorsignals über die relative Rotorlage und der erfassten induzierten elektrischen Größe korrigiert.

15. Elektromotor nach einem der Ansprüche 10 bis 14, bei dem die Steuerelektronik (1,2,3,6) den Elektromotor mittels der erfassten relativen Rotorlage anregt, und diese wiederum mittels der erfassten induzieren elektrischen Größe korrigiert.

16. Elektromotor nach Anspruch 15, bei dem die Steuerelektronik (1,2,3,6) die Anregung des Elektromotors durch eine Verschiebung der Kommutierungszeitpunkte korrigiert.

17. Elektromotor nach Anspruch 15 oder 16, bei dem die Steuerelektronik (1,2,3,6) die Korrektur auf der Basis der Steigung einer steigenden und einer fallenden Flanke und/oder der Summe von zeitlich nacheinander erfassten Werten der induzierten elektrischen Größe bestimmt.

18. Elektromotor nach einem der Ansprüche 10 bis 17, bei dem die Steuerelektronik (1,2,3,6) den Elektromotor mittels eines pulsweitenmodulierten Stroms anregt, die Drehgeschwindigkeit des Rotors (5) misst, und abhängig von der gemessenen Drehgeschwindigkeit das Tastverhältnis des pulsweitenmodulierten Stroms ändert.

19. Elektromotor nach einem der Ansprüche 10 bis 18, bei dem die Steuerelektronik (1,2,3,6) eine Schaltung (6) aus einem Spannungsteiler (20a,b) und einem Tiefpass (22) zum Erfassen der induzierten Spannung umfasst.

20. Elektromotor nach einem der Ansprüche 10 bis 19, bei dem der Sensor (7,8) eine an der Motorwelle angebrachte Magnetkappe (8) und einen in deren Nähe angeordneten Hallsensor zum Erfassen der Drehgeschwindigkeit der Magnetkappe (8) umfasst.

21. Elektromotor nach Anspruch 20, bei dem der Sensor (7,8) ferner die Drehrichtung der Motorwelle erfasst.

22. Elektromotor nach Anspruch 20 oder 21, bei dem die Magnetkappe (8) als Lüfterrad ausgebildet ist, an dem Magnete (14a-c) angeordnet sind.

## Claims

1. Method for exciting an electronically commutated electric motor, comprising the following steps:
without a sensor detecting an induced electrical measurement by movement of the rotor (5) in a motor winding (4a-c);
detecting the relative rotor condition by means of a sensor (7,8), which is coupled with the rotary movement of the rotor (5); and
exciting the electric motor during a rotor status determining phase based on the detected, induced electrical measurement and during a motor operating phase based solely on the detected sensor signal.

2. Method according to claim 1, wherein the detected, induced electrical measurement is a voltage.

3. Method according to claim 1 or 2, wherein the rotor (5) is excited during the rotor status determining phase based on the sensor signal and the detected, induced measurement.

4. Method according to anyone of the above claims, wherein the rotor (5) is excited during the rotor status determining phase with a method of commutation, in which individual motor windings (4a-c) temporally are successively not energized, and during the motor operating phase with a kind of commutation, in which the motor windings (4a-c) are continuously energized.

5. Method according to anyone of the preceding claims, wherein the rotor (5) is excited from the stationary position with a continuously rising rotational speed, until the height of the detected, induced electrical measurement is sufficient for determining the rotor status, and then the rotor excitation is corrected by means of the sensor signal about the relative rotor condition and the detected, induced electrical measurement.

6. Method according to anyone of the preceding claims, wherein the electric motor is excited by means of the detected relative rotor condition, which in turn is corrected by means of the detected, induced electrical measurement.

7. Method according to claim 6, wherein the excitation of the electric motor is corrected by a shift of the commutation time points.

8. Method according to claim 6 or 7, wherein the correction is determined on the basis of the rise of an ascending and a descending flank and/or the sum of temporally successively detected values of the induced electrical measurement.

9. Method according to anyone of the preceding claims, wherein the electric motor is excited by means of a pulse-width-modulated current, the rotational speed of the rotor (5) is measured, and dependent on the measured rotational speed the pulse-width repetition rate of the pulse-width-modulated current is altered.

10. Electronically commutated electric motor, comprising
a rotor (5);
a sensor (7, 8), which supplies a sensor signal about the relative rotor condition; and
control electronics (1, 2, 3, 6), which without a sensor detects an induced electrical measurement by movement of the rotor (5) in a motor winding (4a-c) and excites the electric motor during a rotor status determining phase based on the detected, induced electrical measurement and during a motor operating phase based solely on the detected sensor signal.

11. Electric motor according to claim 10, wherein the control electronics (1, 2, 3, 6) detects a voltage as induced electrical measurement.

12. Electric motor according to claim 10 or 11, wherein the control electronics (1, 2, 3, 6) excites the rotor (5) during a rotor status determining phase based on the sensor signal and the detected, induced measurement.

13. Electric motor according to claim 12, wherein the control electronics (1, 2, 3, 6) excites the rotor (5) during the rotor status determining phase with a method of commutation, in which individual motor windings (4a-c) temporally are successively not energized, and during the motor operating phase with a method of commutation, in which the motor windings (4a-c) are continuously energized.

14. Electric motor according to anyone of claims 10 to 13, wherein the control electronics (1, 2, 3, 6) excites the rotor (5) from the stationary position with a continuously rising rotational speed, until the height of the detected, induced electrical measurement is sufficient for determining the rotor status, and then corrects the rotor excitation by means of the sensor signal about the relative rotor condition and the detected, induced electrical measurement.

15. Electric motor according to anyone of claims 10 to 14, wherein the control electronics (1, 2, 3, 6) excites the electric motor by means of the detected relative rotor condition, and in turn corrects this by means of the detected, induced electrical measurement.

16. Electric motor according to claim 15, wherein the control electronics (1, 2, 3, 6) corrects the excitation of the electric motor by a shift of the commutation time points.

17. Electric motor according to claim 15 or 16, wherein the control electronics (1, 2, 3, 6) determines the correction on the basis of the rise of an ascending and a descending flank and/or the sum of temporally successively detected values of the induced electrical measurement.

18. Electric motor according to anyone of claims 10 to 17, wherein the control electronics (1, 2, 3, 6) excites the electric motor by means of a pulse-width-modulated current, measures the rotational speed of the rotor (5), and dependent on the measured rotational speed alters the pulse-width repetition rate of the pulse-width-modulated current.

19. Electric motor according to anyone of claims 10 to 18, wherein the control electronics (1, 2, 3, 6) comprises a circuit (6) consisting of a voltage divider (20a, b) and a low-pass filter (22) for detecting the induced voltage.

20. Electric motor according to anyone of claims 10 to 19, wherein the sensor (7, 8) comprises a magnetic cap attached to the motor shaft (8) and an echo sensor arranged in its proximity for detecting the rotational speed of the magnetic cap (8).

21. Electric motor according to claim 20, wherein the sensor (7, 8) also detects the direction of rotation of the motor shaft.

22. Electric motor according to claim 20 or 21, wherein the magnetic cap (8) is formed as fan hub, on which magnets (14a-c) are arranged.

## Revendications

1. Procédé d'excitation d'un moteur électrique à commutation électronique, qui comprend les étapes suivantes :
◆ détection sans capteur d'une grandeur électrique induite par le mouvement du rotor (5) dans un enroulement de moteur (4a-c) ;
◆ détection de la position relative du rotor au moyen d'un capteur (7, 8) qui est couplé au mouvement de rotation du rotor (5) ; et
◆ excitation du moteur électrique pendant une phase de détermination de la position du rotor se basant sur la grandeur électrique induite détectée et pendant une phase de fonctionnement du moteur se basant uniquement sur le signal de capteur détecté.

2. Procédé selon la revendication 1, pour lequel la grandeur électrique induite détectée est une tension.

3. Procédé selon la revendication 1 ou 2, pour lequel le rotor (5) est excité pendant la phase de détermination de la position du rotor se basant sur le signal de capteur et la grandeur induite détectée.

4. Procédé selon l'une quelconque des revendications précédentes, pour lequel le rotor (5) est excité pendant la phase de détermination de la position du rotor par un type de commutation, pour lequel des enroulements de moteur (4a-c) individuels ne sont pas parcourus successivement par du courant, et pendant la phase de fonctionnement du moteur par un type de commutation, pour lequel les enroulements de moteur (4a-c) sont parcourus en continu par du courant.

5. Procédé selon l'une quelconque des revendications précédentes, pour lequel le rotor (5) à l'arrêt est excité par un régime croissant en continu, jusqu'à ce que la hauteur de la grandeur électrique induite détectée suffise pour une détermination de la position du rotor, et l'excitation du rotor soit ensuite corrigée au moyen du signal de capteur sur la position relative du rotor et de la grandeur électrique induite détectée.

6. Procédé selon l'une quelconque des revendications précédentes, pour lequel le moteur électrique est excité au moyen de la position relative du rotor détectée qui est corrigée de nouveau au moyen de la grandeur électrique induite détectée.

7. Procédé selon la revendication 6, pour lequel l'excitation du moteur électrique est corrigée par un décalage des moments de commutation.

8. Procédé selon la revendication 6 ou 7, dans lequel la correction est déterminée sur la base de la pente d'un flanc croissant et d'un flanc décroissant et/ou de la somme de valeurs déterminées successivement de la grandeur électrique induite.

9. Procédé selon l'une quelconque des revendications précédentes, pour lequel le moteur électrique est excité au moyen d'un courant à modulation de largeur d'impulsions, la vitesse de rotation du rotor (5) est mesurée et en fonction de la vitesse de rotation mesurée, le taux d'impulsions du courant à modulation de largeur d'impulsions est modifié.

10. Moteur électrique à commutation électronique comprenant
◆ un rotor (5) ;
◆ un capteur (7, 8) qui fournit un signal de capteur sur la position relative du rotor ; et
◆ un système électronique de commande (1, 2, 3, 6) qui détecte sans capteur une grandeur électrique induite par le mouvement du rotor (5) dans un enroulement de moteur (4a-c) et excite le moteur électrique pendant une phase de détermination de la position du rotor se basant sur la grandeur électrique induite détectée et pendant une phase de fonctionnement de moteur se basant uniquement sur le signal de capteur détecté.

11. Moteur électrique selon la revendication 10, pour lequel le système électronique de commande (1, 2, 3, 6) détecte une tension comme grandeur électrique induite.

12. Moteur électrique selon la revendication 10 ou 11, pour lequel le système électronique de commande (1, 2, 3, 6) excite le rotor (5) pendant la phase de détermination de la position du rotor se basant sur le signal de capteur et la grandeur induite détectée.

13. Moteur électrique selon la revendication 12, pour lequel le système électronique de commande (1, 2, 3, 6) excite le rotor (5) pendant la phase de détermination de la position du rotor par un type de commutation, pour lequel des enroulements de moteur (4a-c) individuels ne sont pas parcourus successivement par du courant et pendant la phase de fonctionnement du moteur par un type de commutation, pour lequel les enroulements de moteur (4a-c) sont parcourus en continu par du courant.

14. Moteur électrique selon l'une quelconque des revendications 10 à 13, pour lequel le système électronique de commande (1, 2, 3, 6) excite le rotor (5) à l'arrêt par un régime croissant en continu jusqu'à ce que le niveau de la grandeur électrique induite détectée suffise à déterminer la position du rotor, et l'excitation du rotor soit ensuite corrigée au moyen du signal de capteur sur la position relative du rotor et de la grandeur électrique induite détectée.

15. Moteur électrique selon l'une quelconque des revendications 10 à 14, pour lequel le système électronique de commande (1, 2, 3, 6) excite le moteur électrique au moyen de la position relative du rotor détectée, et corrige celle-ci de nouveau au moyen de la grandeur électrique induite détectée.

16. Moteur électrique selon la revendication 15, pour lequel le système électronique de commande (1, 2, 3, 6) corrige l'excitation du moteur électrique par un décalage des moments de commutation.

17. Moteur électrique selon la revendication 15 ou 16, pour lequel le système électronique de commande (1, 2, 3, 6) détermine la correction sur la base de la pente d'un flanc croissant et d'un flanc décroissant et/ou de la somme de valeurs détectées successivement de la grandeur électrique induite.

18. Moteur électrique selon l'une quelconque des revendications 10 à 17, pour lequel le système électronique de commande (1, 2, 3, 6) excite le moteur électrique au moyen d'un courant à modulation de largeur d'impulsions, mesure la vitesse de rotation du rotor (5), et en fonction de la vitesse de rotation mesurée, modifie le taux d'impulsions du courant à modulation de largeur d'impulsions.

19. Moteur électrique selon l'une quelconque des revendications 10 à 18, pour lequel le système électronique de commande (1, 2, 3, 6) comprend un circuit (6) composé d'un diviseur de tension (20a, b) et d'un passe-bas (22) afin de détecter la tension induite.

20. Moteur électrique selon l'une quelconque des revendications 10 à 19, pour lequel le capteur (7, 8) comprend un capuchon magnétique (8) monté sur l'arbre du moteur et un capteur à effet Hall disposé à proximité de celui-ci afin de détecter la vitesse de rotation du capuchon magnétique (8).

21. Moteur électrique selon la revendication 20, pour lequel le capteur (7, 8) détecte de plus le sens de rotation de l'arbre du moteur.

22. Moteur électrique selon la revendication 20 ou 21, pour lequel le capuchon magnétique (8) est réalisé comme une roue de ventilateur, sur laquelle sont disposés des aimants (14a-c).
